# EUROPEAN PATENT SPECIFICATION

(11) **EP 3 525 530 B1**
(45) Date of publication and mention of the grant of the patent: **25.08.2021**
(21) Application number: 17874974.3
(22) Date of filing: 13.11.2017
(51) Int. Cl.: H04W 68/00, H04W 48/08

(54) **METHOD AND DEVICE FOR CONFIGURING RAN-BASED NOTIFICATION AREA**
VERFAHREN UND VORRICHTUNG ZUR KONFIGURATION EINES BENACHRICHTIGUNGSBEREICHS AUF RAN-BASIS
PROCÉDÉ ET DISPOSITIF DE CONFIGURATION DE ZONE DE NOTIFICATION FAISANT APPEL À UN RÉSEAU RAN

(30) Priority: 22.11.2016 US 201662425599 P
(43) Date of publication of application: 14.08.2019
(73) Proprietor: LG Electronics Inc., Seoul 07336 (KR)
(72) Inventor: KIM, Sangwon, Seoul 06772 (KR)
(74) Representative: Frenkel, Matthias Alexander
(86) International application number: PCT/KR2017/012783
(87) International publication number: WO 2018/097528

(56) References cited:
- US-A1- 2011 263 274
- US-A1- 2012 264 416
- US-A1- 2016 309 379
- INTEL CORPORATION: "Discussion on RAN notification area for the new RRC state", 3GPP DRAFT; R2-168524_RAN_NOTIFICATION_AREA_INTEL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Reno, USA; 20161114 - 20161118 13 November 2016 (2016-11-13), XP051178105, Retrieved from the Internet: URL:http://www.3gpp.org/ftp/Meetings_3GPP_ SYNC/RAN2/Docs/ [retrieved on 2016-11-13]
- QUALCOMM INCORPORATED: "NR RRC Inactive State principles RAN based notification area", 3GPP DRAFT; R2-168602 NR INACTIVE STATE PRINCIPLES - NOTIFICATION ID, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; F , vol. RAN WG2, no. Reno, US; 20161114 - 20161118 13 November 2016 (2016-11-13), XP051178172, Retrieved from the Internet: URL:http://www.3gpp.org/ftp/Meetings_3GPP_ SYNC/RAN2/Docs/ [retrieved on 2016-11-13]
- INTEL CORPORATION: "Details on the NR_RRC_INACTIVE state", 3GPP DRAFT; R2-168523_INTEL_NR_RRC_INACTIVE-STATE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Reno, USA; 20161114 - 20161118 13 November 2016 (2016-11-13), XP051178104, Retrieved from the Internet: URL:http://www.3gpp.org/ftp/Meetings_3GPP_ SYNC/RAN2/Docs/ [retrieved on 2016-11-13]
- CATT: "Small data transmission in inactive state", 3GPP DRAFT; R2-166118, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Kaohsiung; 20161010 - 20161014 9 October 2016 (2016-10-09), XP051150736, Retrieved from the Internet: URL:http://www.3gpp.org/ftp/Meetings_3GPP_ SYNC/RAN2/Docs/ [retrieved on 2016-10-09]
- HUAWEI HISILICON: "DL data transmission in RRC_INACTIVE", 3GPP DRAFT; R2-168860 DL DATA TRANSMISSION IN RRC_INACTIVE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Reno, Nevada, USA; 20161114 - 20161118 14 November 2016 (2016-11-14), XP051178421, Retrieved from the Internet: URL:http://www.3gpp.org/ftp/Meetings_3GPP_ SYNC/RAN2/Docs/ [retrieved on 2016-11-14]
- CATT: 'Inactive State and RAN Based Notification Area' R3-162217, GPP TSG-RAN WG3 MEETING #93BIS 30 September 2016, SOPHIA ANTIPOLIS, FRANCE, XP051162925

## Description

### BACKGROUND OF THE INVENTION

### Field of the invention

The present invention relates to a wireless communication system, and more particularly, to a method of configuring a radio access network (RAN) based notification area, and a device supporting the method.

### Related Art

In order to meet the demand for wireless data traffic soring since the 4th generation (4G) communication system came to the market, there are ongoing efforts to develop enhanced 5th generation (5G) communication systems or pre-5G communication systems. For the reasons, the 5G communication system or pre-5G communication system is called the beyond 4G network communication system or post long-term evolution (LTE) system.

In the discussion of NR standardization, an RRC_CONNECTED state and an RRC_IDLE state are defined by default as an RRC state, and an RRC_INACTIVE state is additionally introduced. A user equipment (UE) in the RRC_INACTIVE state performs a radio control procedure similarly to the RRC_IDLE state in order to reduce power consumption. However, the UE in the RRC_INACTIVE state maintains a connection state between the UE and a network similarly to the RRC_CONNECTED state in order to minimize a control procedure required when transitioning to the RRC_CONNECTED state.

The document ("Discussion on RAN notification are for the new RRC state", R2-168524) outlines aspects related to a RAN based notification area and its configuration for support of RRC_INACTIVE state. In the document it is proposed that the RAN based notification area is UE-specific and configurable based on UE characteristics, an NG Core/CN Location Area Code is broadcasted in system information of NR Cells, a unique global Cell ID is broadcasted in the system information of NR Cells, and the RAN based notification area is configured explicitly via a dedicated signaling.

### SUMMARY OF THE INVENTION

Meanwhile, if an area identity (ID) of a core network (CN) based notification area is used to configure a radio access network (RAN) based notification area, the RAN based notification area may not be flexibly configured since the ID of the CN based notification area covers a very large area. On the other hand, if a cell ID is used to configure a RAN paging area, it is not desirable since hundreds of cells may need to be signaled to a user equipment (UE) when a network allocates a UE-specific RAN paging area. Therefore, there is a need to introduce a new ID to flexibly configure the RAN based notification area.

The present invention is set out in the appended independent claims. Further embodiments are set out in the dependent claims. In an example, there is provided a method of determining, by a UE, whether a specific cell belongs to a RAN based notification area in a wireless communication system. The method may include: receiving, from a network, a configuration for a RAN based notification area including at least one of an ID of an area including a plurality of cells and a cell ID; receiving, from the specific cell, system information including an ID of the specific cell and an ID of an area including the specific cell; and determining whether the specific cell belongs to the RAN based notification area, based on the configuration for the RAN based notification area and the system information.

In another example, there is provided a UE for determining whether a specific cell belongs to a RAN based notification area in a wireless communication system. The UE may include: a memory; a transceiver; and a processor coupling the memory and the transceiver. The processor may be configured to: control the transceiver to receive, from a network, a configuration for a RAN based notification area including at least one of an ID of an area including a plurality of cells and a cell ID; control the transceiver to receive, from the specific cell, system information including an ID of the specific cell and an ID of an area including the specific cell; and determine whether the specific cell belongs to the RAN based notification area, based on the configuration for the RAN based notification area and the system information.

A RAN based notification area can be flexibly configured.

### BRIEF DESCRIPTION OF THE DRAWINGS

FIG. 1 shows LTE system architecture.
FIG. 2 shows a control plane of a radio interface protocol of an LTE system.
FIG. 3 shows a user plane of a radio interface protocol of an LTE system.
FIG. 4 shows a structure of a 5G system.
FIG. 5 shows a procedure in which a user equipment (UE) checks whether a specific cell belongs to a radio access network (RAN) based notification area according to an embodiment of the present invention.
FIG. 6 is a drawing for explaining a procedure in which a UE checks whether a specific cell belongs to a RAN based notification area according to an embodiment of the present invention.
FIG. 7 is a block diagram showing a method in which a UE determines whether a specific cell belongs to a RAN based notification area according to an embodiment of the present invention.
FIG. 8 is a block diagram illustrating a wireless communication system according to the embodiment of the present invention.

### DESCRIPTION OF EXEMPLARY EMBODIMENTS

The technology described below can be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), etc. The CDMA can be implemented with a radio technology such as universal terrestrial radio access (UTRA) or CDMA-2000. The TDMA can be implemented with a radio technology such as global system for mobile communications (GSM)/general packet ratio service (GPRS)/enhanced data rate for GSM evolution (EDGE). The OFDMA can be implemented with a radio technology such as institute of electrical and electronics engineers (IEEE) 802.11 (Wi-Fi), IEEE 802.16 (WiMAX), IEEE 802.20, evolved UTRA (E-UTRA), etc. IEEE 802.16m is evolved from IEEE 802.16e, and provides backward compatibility with a system based on the IEEE 802.16e. The UTRA is a part of a universal mobile telecommunication system (UMTS). 3rd generation partnership project (3GPP) long term evolution (LTE) is a part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE. 5G is an evolution of the LTE-A.

For clarity, the following description will focus on LTE-A. However, technical features of the present invention are not limited thereto.

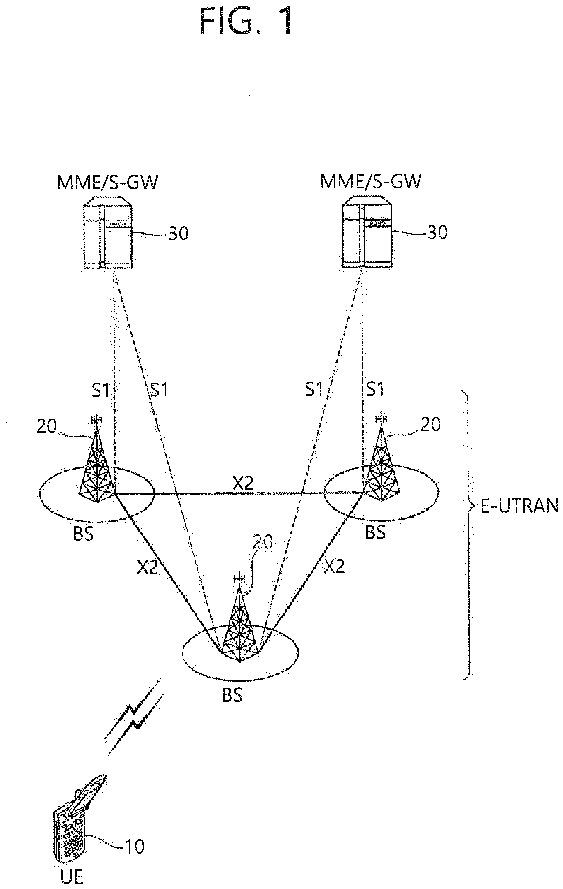

FIG. 1 shows LTE system architecture. The communication network is widely deployed to provide a variety of communication services such as voice over internet protocol (VoIP) through IMS and packet data.

Referring to FIG. 1, the LTE system architecture includes one or more user equipment (UE; 10), an evolved-UMTS terrestrial radio access network (E-UTRAN) and an evolved packet core (EPC). The UE 10 refers to a communication equipment carried by a user. The UE 10 may be fixed or mobile, and may be referred to as another terminology, such as a mobile station (MS), a user terminal (UT), a subscriber station (SS), a wireless device, etc.

The E-UTRAN includes one or more evolved node-B (eNB) 20, and a plurality of UEs may be located in one cell. The eNB 20 provides an end point of a control plane and a user plane to the UE 10. The eNB 20 is generally a fixed station that communicates with the UE 10 and may be referred to as another terminology, such as a base station (BS), a base transceiver system (BTS), an access point, etc. One eNB 20 may be deployed per cell. There are one or more cells within the coverage of the eNB 20. A single cell is configured to have one of bandwidths selected from 1.25, 2.5, 5, 10, and 20 MHz, etc., and provides downlink or uplink transmission services to several UEs. In this case, different cells can be configured to provide different bandwidths.

Hereinafter, a downlink (DL) denotes communication from the eNB 20 to the UE 10, and an uplink (UL) denotes communication from the UE 10 to the eNB 20. In the DL, a transmitter may be a part of the eNB 20, and a receiver may be a part of the UE 10. In the UL, the transmitter may be a part of the UE 10, and the receiver may be a part of the eNB 20.

The EPC includes a mobility management entity (MME) which is in charge of control plane functions, and a system architecture evolution (SAE) gateway (S-GW) which is in charge of user plane functions. The MME/S-GW 30 may be positioned at the end of the network and connected to an external network. The MME has UE access information or UE capability information, and such information may be primarily used in UE mobility management. The S-GW is a gateway of which an endpoint is an E-UTRAN. The MME/S-GW 30 provides an end point of a session and mobility management function for the UE 10. The EPC may further include a packet data network (PDN) gateway (PDN-GW). The PDN-GW is a gateway of which an endpoint is a PDN.

The MME provides various functions including non-access stratum (NAS) signaling to eNBs 20, NAS signaling security, access stratum (AS) security control, Inter core network (CN) node signaling for mobility between 3GPP access networks, idle mode UE reachability (including control and execution of paging retransmission), tracking area list management (for UE in idle and active mode), P-GW and S-GW selection, MME selection for handovers with MME change, serving GPRS support node (SGSN) selection for handovers to 2G or 3G 3GPP access networks, roaming, authentication, bearer management functions including dedicated bearer establishment, support for public warning system (PWS) (which includes earthquake and tsunami warning system (ETWS) and commercial mobile alert system (CMAS)) message transmission. The S-GW host provides assorted functions including peruser based packet filtering (by e.g., deep packet inspection), lawful interception, UE Internet protocol (IP) address allocation, transport level packet marking in the DL, UL and DL service level charging, gating and rate enforcement, DL rate enforcement based on APN-AMBR. For clarity MME/S-GW 30 will be referred to herein simply as a "gateway," but it is understood that this entity includes both the MME and S-GW.

Interfaces for transmitting user traffic or control traffic may be used. The UE 10 and the eNB 20 are connected by means of a Uu interface. The eNBs 20 are interconnected by means of an X2 interface. Neighboring eNBs may have a meshed network structure that has the X2 interface. The eNBs 20 are connected to the EPC by means of an S1 interface. The eNBs 20 are connected to the MME by means of an S1-MME interface, and are connected to the S-GW by means of S1-U interface. The S1 interface supports a many-to-many relation between the eNB 20 and the MME/S-GW.

The eNB 20 may perform functions of selection for gateway 30, routing toward the gateway 30 during a radio resource control (RRC) activation, scheduling and transmitting of paging messages, scheduling and transmitting of broadcast channel (BCH) information, dynamic allocation of resources to the UEs 10 in both UL and DL, configuration and provisioning of eNB measurements, radio bearer control, radio admission control (RAC), and connection mobility control in LTE ACTIVE state. In the EPC, and as noted above, gateway 30 may perform functions of paging origination, LTE_IDLE state management, ciphering of the user plane, SAE bearer control, and ciphering and integrity protection of NAS signaling.

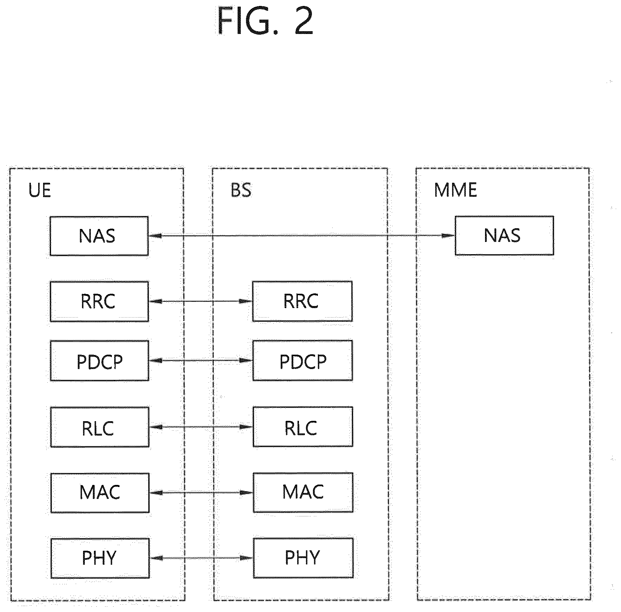

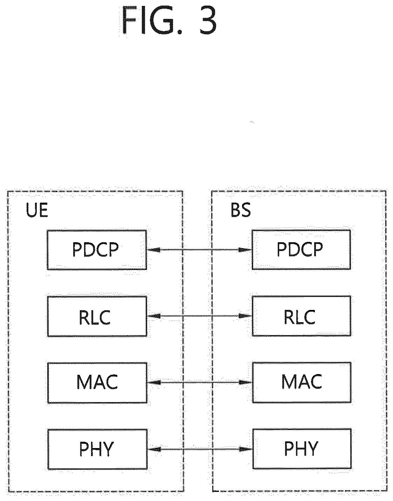

FIG. 2 shows a control plane of a radio interface protocol of an LTE system. FIG. 3 shows a user plane of a radio interface protocol of an LTE system.

Layers of a radio interface protocol between the UE and the E-UTRAN may be classified into a first layer (L1), a second layer (L2), and a third layer (L3) based on the lower three layers of the open system interconnection (OSI) model that is well-known in the communication system. The radio interface protocol between the UE and the E-UTRAN may be horizontally divided into a physical layer, a data link layer, and a network layer, and may be vertically divided into a control plane (C-plane) which is a protocol stack for control signal transmission and a user plane (U-plane) which is a protocol stack for data information transmission. The layers of the radio interface protocol exist in pairs at the UE and the E-UTRAN, and are in charge of data transmission of the Uu interface.

A physical (PHY) layer belongs to the L1. The PHY layer provides a higher layer with an information transfer service through a physical channel. The PHY layer is connected to a medium access control (MAC) layer, which is a higher layer of the PHY layer, through a transport channel. A physical channel is mapped to the transport channel. Data is transferred between the MAC layer and the PHY layer through the transport channel. Between different PHY layers, i.e., a PHY layer of a transmitter and a PHY layer of a receiver, data is transferred through the physical channel using radio resources. The physical channel is modulated using an orthogonal frequency division multiplexing (OFDM) scheme, and utilizes time and frequency as a radio resource.

The PHY layer uses several physical control channels. A physical downlink control channel (PDCCH) reports to a UE about resource allocation of a paging channel (PCH) and a downlink shared channel (DL-SCH), and hybrid automatic repeat request (HARQ) information related to the DL-SCH. The PDCCH may carry a UL grant for reporting to the UE about resource allocation of UL transmission. A physical control format indicator channel (PCFICH) reports the number of OFDM symbols used for PDCCHs to the UE, and is transmitted in every subframe. A physical hybrid ARQ indicator channel (PHICH) carries an HARQ acknowledgement (ACK)/non-acknowledgement (NACK) signal in response to UL transmission. A physical uplink control channel (PUCCH) carries UL control information such as HARQ ACK/NACK for DL transmission, scheduling request, and CQI. A physical uplink shared channel (PUSCH) carries a UL-uplink shared channel (SCH).

A physical channel consists of a plurality of subframes in time domain and a plurality of subcarriers in frequency domain. One subframe consists of a plurality of symbols in the time domain. One subframe consists of a plurality of resource blocks (RBs). One RB consists of a plurality of symbols and a plurality of subcarriers. In addition, each subframe may use specific subcarriers of specific symbols of a corresponding subframe for a PDCCH. For example, a first symbol of the subframe may be used for the PDCCH. The PDCCH carries dynamic allocated resources, such as a physical resource block (PRB) and modulation and coding scheme (MCS). A transmission time interval (TTI) which is a unit time for data transmission may be equal to a length of one subframe. The length of one subframe may be 1 ms.

The transport channel is classified into a common transport channel and a dedicated transport channel according to whether the channel is shared or not. A DL transport channel for transmitting data from the network to the UE includes a broadcast channel (BCH) for transmitting system information, a paging channel (PCH) for transmitting a paging message, a DL-SCH for transmitting user traffic or control signals, etc. The DL-SCH supports HARQ, dynamic link adaptation by varying the modulation, coding and transmit power, and both dynamic and semi-static resource allocation. The DL-SCH also may enable broadcast in the entire cell and the use of beamforming. The system information carries one or more system information blocks. All system information blocks may be transmitted with the same periodicity. Traffic or control signals of a multimedia broadcast/multicast service (MBMS) may be transmitted through the DL-SCH or a multicast channel (MCH).

A UL transport channel for transmitting data from the UE to the network includes a random access channel (RACH) for transmitting an initial control message, a UL-SCH for transmitting user traffic or control signals, etc. The UL-SCH supports HARQ and dynamic link adaptation by varying the transmit power and potentially modulation and coding. The UL-SCH also may enable the use of beamforming. The RACH is normally used for initial access to a cell.

A MAC layer belongs to the L2. The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. A MAC sublayer provides data transfer services on logical channels.

The logical channels are classified into control channels for transferring control plane information and traffic channels for transferring user plane information, according to a type of transmitted information. That is, a set of logical channel types is defined for different data transfer services offered by the MAC layer. The logical channels are located above the transport channel, and are mapped to the transport channels.

The control channels are used for transfer of control plane information only. The control channels provided by the MAC layer include a broadcast control channel (BCCH), a paging control channel (PCCH), a common control channel (CCCH), a multicast control channel (MCCH) and a dedicated control channel (DCCH). The BCCH is a downlink channel for broadcasting system control information. The PCCH is a downlink channel that transfers paging information and is used when the network does not know the location cell of a UE. The CCCH is used by UEs having no RRC connection with the network. The MCCH is a point-to-multipoint downlink channel used for transmitting MBMS control information from the network to a UE. The DCCH is a point-to-point bi-directional channel used by UEs having an RRC connection that transmits dedicated control information between a UE and the network.

Traffic channels are used for the transfer of user plane information only. The traffic channels provided by the MAC layer include a dedicated traffic channel (DTCH) and a multicast traffic channel (MTCH). The DTCH is a point-to-point channel, dedicated to one UE for the transfer of user information and can exist in both uplink and downlink. The MTCH is a point-to-multipoint downlink channel for transmitting traffic data from the network to the UE.

Uplink connections between logical channels and transport channels include the DCCH that can be mapped to the UL-SCH, the DTCH that can be mapped to the UL-SCH and the CCCH that can be mapped to the UL-SCH. Downlink connections between logical channels and transport channels include the BCCH that can be mapped to the BCH or DL-SCH, the PCCH that can be mapped to the PCH, the DCCH that can be mapped to the DL-SCH, and the DTCH that can be mapped to the DL-SCH, the MCCH that can be mapped to the MCH, and the MTCH that can be mapped to the MCH.

An RLC layer belongs to the L2. The RLC layer provides a function of adjusting a size of data, so as to be suitable for a lower layer to transmit the data, by concatenating and segmenting the data received from an upper layer in a radio section. In addition, to ensure a variety of quality of service (QoS) required by a radio bearer (RB), the RLC layer provides three operation modes, i.e., a transparent mode (TM), an unacknowledged mode (UM), and an acknowledged mode (AM). The AM RLC provides a retransmission function through an automatic repeat request (ARQ) for reliable data transmission. Meanwhile, a function of the RLC layer may be implemented with a functional block inside the MAC layer. In this case, the RLC layer may not exist.

A packet data convergence protocol (PDCP) layer belongs to the L2. The PDCP layer provides a function of header compression function that reduces unnecessary control information such that data being transmitted by employing IP packets, such as IPv4 or IPv6, can be efficiently transmitted over a radio interface that has a relatively small bandwidth. The header compression increases transmission efficiency in the radio section by transmitting only necessary information in a header of the data. In addition, the PDCP layer provides a function of security. The function of security includes ciphering which prevents inspection of third parties, and integrity protection which prevents data manipulation of third parties.

A radio resource control (RRC) layer belongs to the L3. The RLC layer is located at the lowest portion of the L3, and is only defined in the control plane. The RRC layer takes a role of controlling a radio resource between the UE and the network. For this, the UE and the network exchange an RRC message through the RRC layer. The RRC layer controls logical channels, transport channels, and physical channels in relation to the configuration, reconfiguration, and release of RBs. An RB is a logical path provided by the L1 and L2 for data delivery between the UE and the network. That is, the RB signifies a service provided the L2 for data transmission between the UE and E-UTRAN. The configuration of the RB implies a process for specifying a radio protocol layer and channel properties to provide a particular service and for determining respective detailed parameters and operations. The RB is classified into two types, i.e., a signaling RB (SRB) and a data RB (DRB). The SRB is used as a path for transmitting an RRC message in the control plane. The DRB is used as a path for transmitting user data in the user plane.

A Non-Access Stratum (NAS) layer placed over the RRC layer performs functions, such as session management and mobility management.

Referring to FIG. 2, the RLC and MAC layers (terminated in the eNB on the network side) may perform functions such as scheduling, automatic repeat request (ARQ), and hybrid automatic repeat request (HARQ). The RRC layer (terminated in the eNB on the network side) may perform functions such as broadcasting, paging, RRC connection management, RB control, mobility functions, and UE measurement reporting and controlling. The NAS control protocol (terminated in the MME of gateway on the network side) may perform functions such as a SAE bearer management, authentication, LTE_IDLE mobility handling, paging origination in LTE IDLE, and security control for the signaling between the gateway and UE.

Referring to FIG. 3, the RLC and MAC layers (terminated in the eNB on the network side) may perform the same functions for the control plane. The PDCP layer (terminated in the eNB on the network side) may perform the user plane functions such as header compression, integrity protection, and ciphering.

### Hereinafter, An RRC state of a UE and RRC connection procedure are described.

An RRC state indicates whether an RRC layer of the UE is logically connected to an RRC layer of the E-UTRAN. The RRC state may be divided into two different states such as an RRC connected state and an RRC idle state. When an RRC connection is established between the RRC layer of the UE and the RRC layer of the E-UTRAN, the UE is in RRC_CONNECTED, and otherwise the UE is in RRC_IDLE. Since the UE in RRC_CONNECTED has the RRC connection established with the E-UTRAN, the E-UTRAN may recognize the existence of the UE in RRC CONNECTED and may effectively control the UE. Meanwhile, the UE in RRC_IDLE may not be recognized by the E-UTRAN, and a CN manages the UE in unit of a TA which is a larger area than a cell. That is, only the existence of the UE in RRC_IDLE is recognized in unit of a large area, and the UE must transition to RRC_CONNECTED to receive a typical mobile communication service such as voice or data communication.

In RRC_IDLE state, the UE may receive broadcasts of system information and paging information while the UE specifies a discontinuous reception (DRX) configured by NAS, and the UE has been allocated an identification (ID) which uniquely identifies the UE in a tracking area and may perform public land mobile network (PLMN) selection and cell reselection. Also, in RRC_IDLE state, no RRC context is stored in the eNB.

In RRC CONNECTED state, the UE has an E-UTRAN RRC connection and a context in the E-UTRAN, such that transmitting and/or receiving data to/from the eNB becomes possible. Also, the UE can report channel quality information and feedback information to the eNB. In RRC_CONNECTED state, the E-UTRAN knows the cell to which the UE belongs. Therefore, the network can transmit and/or receive data to/from UE, the network can control mobility (handover and inter-radio access technologies (RAT) cell change order to GSM EDGE radio access network (GERAN) with network assisted cell change (NACC)) of the UE, and the network can perform cell measurements for a neighboring cell.

In RRC_IDLE state, the UE specifies the paging DRX cycle. Specifically, the UE monitors a paging signal at a specific paging occasion of every UE specific paging DRX cycle. The paging occasion is a time interval during which a paging signal is transmitted. The UE has its own paging occasion.

A paging message is transmitted over all cells belonging to the same tracking area. If the UE moves from one TA to another TA, the UE will send a tracking area update (TAU) message to the network to update its location.

When the user initially powers on the UE, the UE first searches for a proper cell and then remains in RRC_IDLE in the cell. When there is a need to establish an RRC connection, the UE which remains in RRC_IDLE establishes the RRC connection with the RRC of the E-UTRAN through an RRC connection procedure and then may transition to RRC CONNECTED. The UE which remains in RRC IDLE may need to establish the RRC connection with the E-UTRAN when uplink data transmission is necessary due to a user's call attempt or the like or when there is a need to transmit a response message upon receiving a paging message from the E-UTRAN.

To manage mobility of the UE in the NAS layer, two states are defined, i.e., an EPS mobility management-REGISTERED (EMM-REGISTERED) state and an EMM-DEREGISTERED state. These two states apply to the UE and the MME. Initially, the UE is in the EMM-DEREGISTERED state. To access a network, the UE performs a process of registering to the network through an initial attach procedure. If the attach procedure is successfully performed, the UE and the MME enter the EMM-REGISTERED state.

To manage a signaling connection between the UE and the EPC, two states are defined, i.e., an EPS connection management (ECM)-IDLE state and an ECM-CONNECTED state. These two states apply to the UE and the MME. When the UE in the ECM-IDLE state establishes an RRC connection with the E-UTRAN, the UE enters the ECM-CONNECTED state. When the MME in the ECM-IDLE state establishes an S 1 connection with the E-UTRAN, the MME enters the ECM-CONNECTED state. When the UE is in the ECM-IDLE state, the E-UTRAN does not have context information of the UE. Therefore, the UE in the ECM-IDLE state performs a UE-based mobility related procedure such as cell selection or reselection without having to receive a command of the network. On the other hand, when the UE is in the ECM-CONNECTED state, mobility of the UE is managed by the command of the network. If a location of the UE in the ECM-IDLE state becomes different from a location known to the network, the UE reports the location of the UE to the network through a tracking area update procedure.

### Hereinafter, a 5G network structure is described.

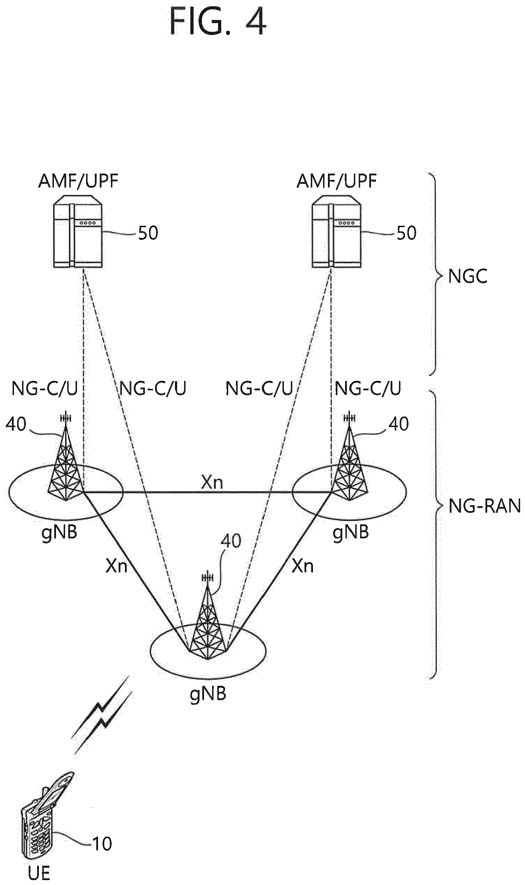

FIG. 4 shows a structure of a 5G system.

In case of an evolved packet core (EPC) having a core network structure of the existing evolved packet system (EPS), a function, a reference point, a protocol, or the like is defined for each entity such as a mobility management entity (MME), a serving gateway (S-GW), a packet data network gateway (P-GW), or the like.

On the other hand, in case of a 5G core network (or a NextGen core network), a function, a reference point, a protocol, or the like is defined for each network function (NF). That is, in the 5G core network, the function, the reference point, the protocol, or the like is not defined for each entity.

Referring to FIG. 4, the 5G system structure includes at least one UE 10, a next generation-radio access network (NG-RAN), and a next generation core (NGC).

The NG-RAN may include at least one gNB 40, and a plurality of UEs may be present in one cell. The gNB 40 provides the UE with end points of the control plane and the user plane. The gNB 40 is generally a fixed station that communicates with the UE 10 and may be referred to as another terminology, such as a base station (BS), a base transceiver system (BTS), an access point, or the like. One gNB 40 may be arranged in every cell. At least one cell may be present in a coverage of the gNB 40.

The NGC may include an access and mobility function (AMF) and a session management function (SMF) which are responsible for a function of a control plane. The AMF may be responsible for a mobility management function, and the SMF may be responsible for a session management function. The NGC may include a user plane function (UPF) which is responsible for a function of a user plane.

Interfaces for transmitting user traffic or control traffic may be used. The UE 10 and the gNB 40 may be connected by means of a Uu interface. The gNBs 40 may be interconnected by means of an X2 interface. Neighboring gNBs 40 may have a meshed network structure based on an Xn interface. The gNBs 40 may be connected to an NGC by means of an NG interface. The gNBs 40 may be connected to an AMF by means of an NG-C interface, and may be connected to a UPF by means of an NG-U interface. The NG interface supports a many-to-many-relation between the gNB 40 and the AMF/UPF 50.

A gNB host may perform functions such as functions for radio resource management, IP header compression and encryption of user data stream, selection of an AMF at UE attachment when no routing to an AMF can be determined from the information provided by the UE, routing of user plane data towards UPF(s), scheduling and transmission of paging messages (originated from the AMF), scheduling and transmission of system broadcast information (originated from the AMF or O&M), or measurement and measurement reporting configuration for mobility and scheduling.

An access and mobility function (AMF) host may perform primary functions such as NAS signalling termination, NAS signalling security, AS security control, inter CN node signalling for mobility between 3GPP access networks, idle mode UE reachability (including control and execution of paging retransmission), tracking area list management (for UE in idle and active mode), AMF selection for handovers with AMF change, access authentication, or access authorization including check of roaming rights.

A user plane function (UPF) host may perform primary functions such as anchor point for Intra-/inter-RAT mobility (when applicable), external PDU session point of interconnect to data network, packet routing & forwarding, packet inspection and user plane part of policy rule enforcement, traffic usage reporting, uplink classifier to support routing traffic flows to a data network, branching point to support multi-homed PDU session, QoS handling for user plane, e.g. packet filtering, gating, UL/DL rate enforcement, uplink traffic verification (SDF to QoS flow mapping), transport level packet marking in the uplink and downlink, or downlink packet buffering and downlink data notification triggering.

A session management function (SMF) host may perform primary functions such as session management, UE IP address allocation and management, selection and control of UP function, configuring traffic steering at UPF to route traffic to proper destination, controlling part of policy enforcement and QoS, or downlink data notification.

### Hereinafter, an RRC INACTIVE state of a UE is described.

In the discussion on NR standardization, an RRC_INACTIVE state has been newly introduced in addition to the existing RRC CONNETED state and RRC_ IDLE state. The RRC_INACTIVE state is a state introduced to efficiently manage a specific UE (for example, mMTC UE). A UE in the RRC_INACTIVE state performs a radio control procedure similarly to a UE in the RRC IDLE state in order to reduce power consumption. However, the UE in the RRC_INACTIVE state maintains a connection state between the UE and a network similarly to the RRC CONNECTED state in order to minimize a control procedure required when transitioning to the RRC_CONNECTED state. In the RRC_INACTIVE state, a radio access resource is released, but wired access may be maintained. For example, in the RRC INACTIVE state, the radio access resource is released, but an NG interface between a gNB and a NGC or an S1 interface between an eNB and an EPC may be maintained. In the RRC INACTIVE state, a core network recognizes that the UE is normally connected to a BS. On the other hand, the BS may not perform connection management for the UE in RRC_INACTIVE state.

In case of a UE in the lightly connected mode, an MME may maintain an S1 connection of the activated UE to hide mobility and state transitions from a core network. In other words, in case of a UE in the RRC INACTIVE state, an AMF may maintain an NG connection of the activated UE to hide mobility and state transitions from a next generation core (NGC). In the present specification, the RRC_INACTIVE state may be used in concept similar to a lightly connected mode, a lightweight connected mode, a semi-connected mode, or the like.

Meanwhile, if an area identity (ID) of a core network (CN) based notification area is used to configure a RAN based notification area, the RAN based notification area may not be flexibly configured since the ID of the CN based notification area covers a very large area. For example, the ID of the CN based notification area may be a tracking area code. In the present specification, CN based notification may imply CN paging, and RAN based notification may imply RAN paging.

On the other hand, if a cell ID is used to configure a RAN paging area, it is not desirable since hundreds of cells may need to be signaled to a UE when a network allocates a UE-specific RAN paging area. Therefore, there is a need to introduce a new ID to flexibly configure the RAN based notification area. Hereinafter, according to an embodiment of the present invention, a RAN based notification area configured based on a new ID is described, and a method of determining whether a specific cell belongs to the RAN based notification area and a device supporting the method are described. In the present specification, the specific cell may be at least any one of a serving cell, a neighboring cell, and a target cell.

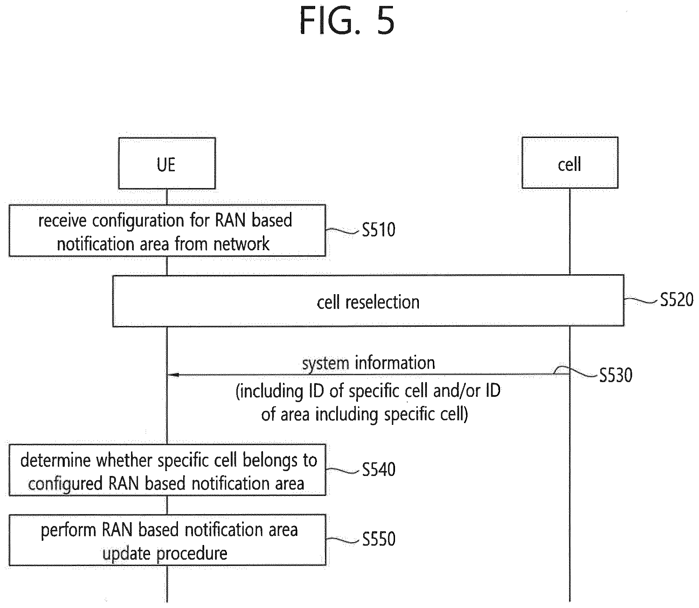

FIG. 5 shows a procedure in which a UE checks whether a specific cell belongs to a RAN based notification area according to an embodiment of the present invention.

Referring to FIG. 5, in step S510, the UE may receive a configuration for the RAN based notification area from a network. That is, the UE may receive a configuration for a RAN paging area from the network. The configuration for the RAN based notification area may include at least any one of an ID of an area including a plurality of cells and a cell ID. The ID of the area including the plurality of cells may imply an ID of a CN based notification area. The RAN based notification area or the RAN paging area is applicable for a UE of an RRC_INACTIVE state or a UE of a LIGHT_CONNECTED state.

In step S520, the UE may perform a cell reselection procedure. Accordingly, the UE may change a serving cell.

In step S530, the UE may receive system information from the serving cell. The system information may include an ID of the serving cell and an ID of an area including the serving cell. For example, the ID of the area including the serving cell may be an ID of an area to which the serving cell belongs. For example, the ID of the area including the serving cell may be an ID of a CN based notification area to which the serving cell belongs. For example, the ID of the area including the serving cell may be a code of a paging area to which the serving cell belongs.

Alternatively, the UE may receive system information from the neighboring cell before performing the cell reselection procedure of step S520. The system information may include an ID of the neighboring cell and an ID of an area including the neighboring cell. For example, the ID of the area including the neighboring cell may be an ID of an area to which the neighboring cell belongs. For example, the ID of the area including the neighboring cell may be an ID of a CN based notification area to which the neighboring cell belongs. For example, the ID of the area including the neighboring cell may be a code of a paging area to which the neighboring cell belongs.

Alternatively, the UE may receive system information from the target cell before performing the cell reselection procedure of step S520. The system information may include an ID of the target cell and an ID of an area including the target cell. For example, the ID of the area including the target cell may be an ID of an area to which the target cell belongs. For example, the ID of the area including the target cell may be an ID of a CN based notification area to which the target cell belongs. For example, the ID of the area including the target cell may be a code of a paging area to which the target cell belongs.

In step S540, the UE may check whether the specific cell belongs to the configured RAN based notification area. The specific cell may be at least any one of a serving cell, a neighboring cell, and a target cell.

For example, if at least any one of the specific cell's ID included in system information received from the specific cell and the ID of the area including the specific cell is included in the configuration for the RAN based notification area, the UE may consider that the specific cell belongs to the RAN based notification area. Otherwise, the UE may consider that the specific cell does not belong to the RAN based notification area.

Alternatively, if both the specific cell's ID included in system information received from the specific cell and the ID of the area including the specific cell are included in the configuration for the RAN based notification area, the UE may consider that the specific cell belongs to the RAN based notification area. Otherwise, the UE may consider that the specific cell does not belong to the RAN based notification area.

In step S550, if the UE considers that the specific cell does not belong to the RAN based notification area, the UE may perform a RAN based notification update procedure. The UE may inform a network that the UE gets out of the RAN based notification area.

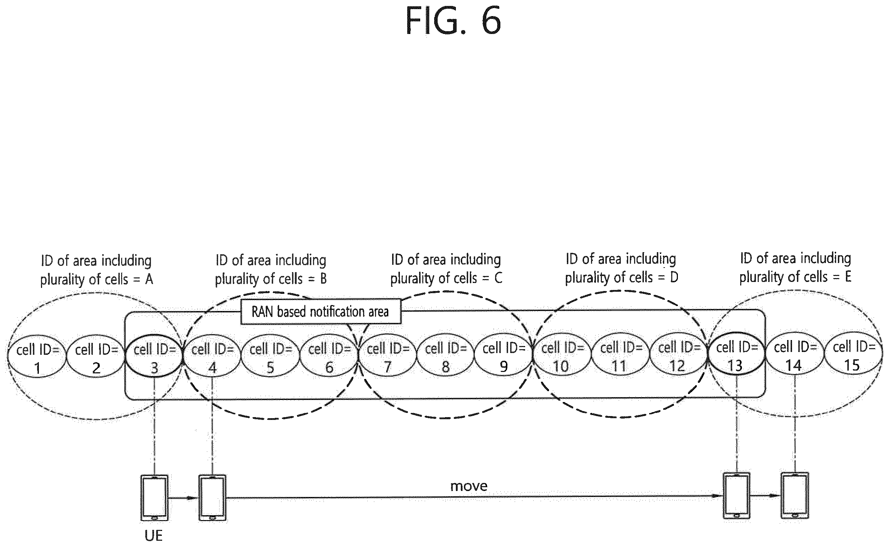

FIG. 6 is a drawing for explaining a procedure in which a UE checks whether a specific cell belongs to a RAN based notification area according to an embodiment of the present invention.

Referring to FIG. 6, a UE which camps on a cell 3 may be configured with a RAN based notification area. In addition, it is assumed that the RAN based notification area consists of 11 cells. That is, it is assumed that the RAN based notification area consists of the cell 3 to a cell 13. A configuration for the RAN based notification area may include an ID of an area including a plurality of cells and a cell ID.

The RAN based notification area consisting of the cell 3 to the cell 13 may be configured as shown in Table 1.

**[Table 1]**

| ID of area including plurality of cells | Cell ID |
|---|---|
| - | 3 |
| B | - |
| C | - |
| D | - |
| - | 13 |

Referring to Table 1, only if all of areas including a plurality of cells are included in the RAN based notification area, an ID of the area including the plurality of cells may be included in a configuration of the RAN based notification area. Meanwhile, if only some cells of the area including the plurality of cells are included in the RAN based notification area, the ID of the area including the plurality of cells may not be included in the configuration for the RAN based notification area, but some cells included in the RAN based notification area may be included in the configuration for the RAN based notification area. Hereinafter, for convenience of explanation, the configuration for the RAN based notification area defined as shown in Table 1 is referred to as an option 1.

Alternatively, the RAN based notification area consisting of the cell 3 to the cell 13 may be configured as shown in Table 2.

**[Table 2]**

| ID of area including plurality of cells | Cell ID |
|---|---|
| A | 3 |
| B | - |
| C | - |
| D | - |
| E | 13 |

Referring to Table 2, even if only some cells of the area including the plurality of cells are included in the RAN based notification area, the ID of the area including the plurality of cells may be included in the configuration of the RAN based notification area, and an ID of some cells additionally included in the RAN based notification area may be included in the configuration for the RAN based notification area. If the ID of the area including the plurality of cells is included in the configuration for the RAN based notification area and if the cell ID is not included in the configuration for the RAN based notification area, the UE may consider all cells belonging to the area including the plurality of cells as part of the RAN based notification area. On the other hand, if the ID of the area including the plurality of cells is included in the configuration for the RAN based notification area and if the cell ID is additionally included in the configuration for the RAN based notification area, the UE may consider only a cell corresponding to a listed cell ID out of the cells belonging to the area including the plurality of cells as part of the RAN based notification area. Hereinafter, for convenience of explanation, the configuration for the RAN based notification area defined as shown in Table 2 is referred to as an option 2.

### (1) Option 1

Referring to FIG. 6, a UE which is configured with the RAN based notification area of Table 1 in the cell 3 may consider that an area B including a plurality of cells, an area C including a plurality of cells, an area D including a plurality of cells, and the cells 3 to 13 are included in a RAN based notification area.

Thereafter, upon moving to the cell 4, the UE may reselect the cell 4 and camp on the cell 4. The UE may receive system information from the cell 4. The system information may include an ID of the area B including the plurality of cells and an ID of the cell 4. Since the ID of the area B including the plurality of cells is listed in the configuration for the RAN based notification area of Table 1, the UE may consider that a new serving cell 4 belongs to the RAN based notification area.

Thereafter, upon moving to the cell 13, the UE reselect the cell 13 and camp on the cell 13. The UE may receive system information from the cell 13. The system information may include an ID of an area E including the plurality of cells and an ID of the cell 13. Since the ID of the cell 13 is listed in the configuration for the RAN based notification area of Table 1, the UE may consider that a new serving cell 13 belongs to the RAN based notification area.

Thereafter, upon moving to the cell 14, the UE may reselect the cell 14 and camp on the cell 14. The UE may receive system information from the cell 14. The system information may include an ID of the area E including the plurality of cells and an ID of the cell 14. Since both the ID of the area E including the plurality of cells and the ID of the cell 14 are not listed in the configuration for the RAN based notification area of Table 1, the UE may consider that a new serving cell 14 does not belong to the RAN based notification area. Then, the UE may perform a RAN based notification area update procedure.

In case of the option 1, if at least any one of a specific cell's ID included in the system information and an ID of an area including a specific cell is included in the configuration for the RAN based notification area, the UE may consider that the specific cell belongs to the RAN based notification area. In other words, if both the specific cell's ID included in the system information and the ID of the area including the specific cell are not included in the configuration for the RAN based notification area, the UE may consider that the specific cell does not belong to the RAN based notification area.

### (2) Option 2

Referring to FIG. 6, a UE which is configured with the RAN based notification area of Table 2 in the cell 3 may consider that an area B including a plurality of cells, an area C including a plurality of cells, an area D including a plurality of cells, and the cells 3 to 13 are included in a RAN based notification area.

Thereafter, upon moving to the cell 4, the UE may reselect the cell 4 and camp on the cell 4. The UE may receive system information from the cell 4. The system information may include an ID of the area B including the plurality of cells and an ID of the cell 4. Since the ID of the area B including the plurality of cells is listed in the configuration for the RAN based notification area of Table 2 and there is no cell ID mapped to the ID of the area B including the plurality of cells, the UE may consider that a new serving cell 4 belongs to the RAN based notification area.

Thereafter, upon moving to the cell 13, the UE reselect the cell 13 and camp on the cell 13. The UE may receive system information from the cell 13. The system information may include an ID of an area E including the plurality of cells and an ID of the cell 13. Since both the ID of the area E including the plurality of cells and the ID of the cell 13 are listed in the configuration for the RAN based notification area of Table 2, the UE may consider that a new serving cell 13 belongs to the RAN based notification area.

Thereafter, upon moving to the cell 14, the UE may reselect the cell 14 and camp on the cell 14. The UE may receive system information from the cell 14. The system information may include an ID of the area E including the plurality of cells and an ID of the cell 14. Since the ID of the area E including the plurality of cells is listed in the configuration for the RAN based notification area of Table 2 but the ID of the cell 14 is not listed in the configuration for the RAN based notification area of Table 2, the UE may consider that a new serving cell 14 does not belong to the RAN based notification area. Then, the UE may perform a RAN based notification area update procedure.

In case of the option 2, if the configuration for the RAN based notification area includes both the ID of the area including the plurality of cells and the cell ID belonging to the era, the UE may consider that the specific cell belongs to the RAN based notification area only when both the specific cell's ID included in the system information and the ID of the area including the specific cell are included in the configuration for the RAN based notification area.

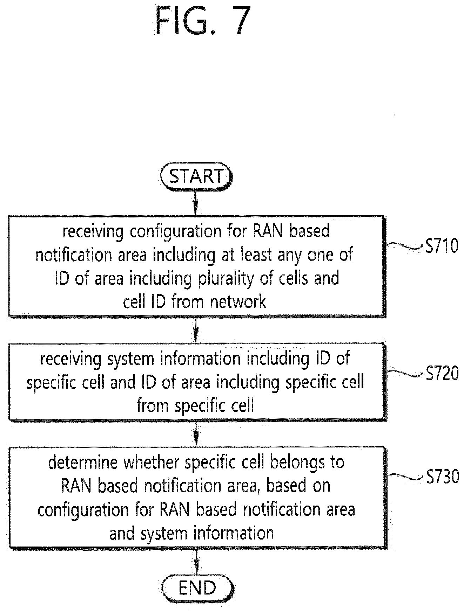

FIG. 7 is a block diagram showing a method in which a UE determines whether a specific cell belongs to a RAN based notification area according to an embodiment of the present invention.

Referring to FIG. 7, in step S710, the UE may receive a configuration for a RAN based notification area including at least any one of an ID of an area including a plurality of cells and a cell ID from a network. The area including the plurality of cells may be a core network (CN) based notification area. The UE may be in an RRC_INACTIVE state.

In step S720, the UE may receive system information including an ID of the specific cell and an ID of an area including the specific cell from the network. When the UE performs cell reselection on the specific cell, the system information may be received from the specific cell. Alternatively, the system information may be received from the specific cell before the UE performs cell reselection on the specific cell. The specific cell may be at least any one of a serving cell, a neighboring cell, and a target cell.

In step S730, the UE may determine whether the specific cell belongs to the RAN based notification area, based on the configuration for the RAN based notification area and the system information.

If at least any one of the specific cell's ID included in the system information and the ID of the area including the specific cell is included in the configuration for the RAN based notification area, it may be determined that the specific cell belongs to the RAN based notification area.

If the specific cell's ID included in the system information and the ID of the area including the specific cell are not included in the configuration for the RAN based notification area, it may be determined that the specific cell does not belong to the RAN based notification area. In this case, the UE may initiate a RAN based notification area update procedure. In addition, the UE may inform the network of not belonging to the RAN based notification area.

If the configuration for the RAN based notification area includes the ID of the area including the plurality of cells and the cell ID belonging to the area and if the specific cell's ID included in the system information and the ID of the area including the specific cell are included in the configuration for the RAN based notification area, it may be determined that the specific cell belongs to the RAN based notification area.

If the configuration for the RAN based notification area includes the ID of the area including the plurality of cells and the cell ID belonging to the area and if at least any one of the specific cell's ID included in the system information and the ID of the area including the specific cell is not included in the configuration for the RAN based notification area, it may be determined that the specific cell does not belong to the RAN based notification area.

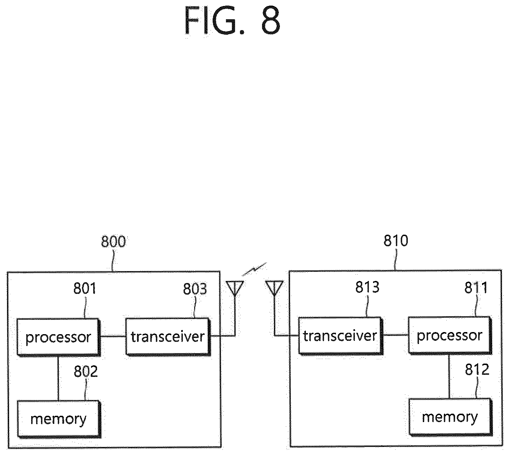

FIG. 8 is a block diagram illustrating a wireless communication system according to the embodiment of the present invention.

A BS 800 includes a processor 801, a memory 802 and a transceiver 803. The memory 802 is connected to the processor 801, and stores various information for driving the processor 801. The transceiver 803 is connected to the processor 801, and transmits and/or receives radio signals. The processor 801 implements proposed functions, processes and/or methods. In the above embodiment, an operation of the base station may be implemented by the processor 801.

A UE 810 includes a processor 811, a memory 812 and a transceiver 813. The memory 812 is connected to the processor 811, and stores various information for driving the processor 811. The transceiver 813 is connected to the processor 811, and transmits and/or receives radio signals. The processor 811 implements proposed functions, processes and/or methods. In the above embodiment, an operation of the UE may be implemented by the processor 811.

The processor may include an application-specific integrated circuit (ASIC), a separate chipset, a logic circuit, and/or a data processing unit. The memory may include a read-only memory (ROM), a random access memory (RAM), a flash memory, a memory card, a storage medium, and/or other equivalent storage devices. The transceiver may include a base-band circuit for processing a wireless signal. When the embodiment is implemented in software, the aforementioned methods can be implemented with a module (i.e., process, function, etc.) for performing the aforementioned functions. The module may be stored in the memory and may be performed by the processor. The memory may be located inside or outside the processor, and may be coupled to the processor by using various well-known means.

Various methods based on the present specification have been described by referring to drawings and reference numerals given in the drawings on the basis of the aforementioned examples. Although each method describes multiple steps or blocks in a specific order for convenience of explanation, the invention disclosed in the claims is not limited to the order of the steps or blocks, and each step or block can be implemented in a different order, or can be performed simultaneously with other steps or blocks. In addition, those ordinarily skilled in the art can know that the invention is not limited to each of the steps or blocks, and at least one different step can be added or deleted without departing from the scope of the invention.

The aforementioned embodiment includes various examples. It should be noted that those ordinarily skilled in the art know that all possible combinations of examples cannot be explained, and also know that various combinations can be derived from the technique of the present specification.

## Claims

1. A method of determining, by a user equipment, UE, whether a specific cell belongs to a radio access network, RAN, based notification area in a wireless communication system, the method comprising:
receiving (S510), from a network, a configuration for a RAN based notification area, wherein the configuration includes a plurality of identifiers, IDs, for each of a plurality of areas included in the RAN based notification area and a plurality of cell IDs for each of a plurality of cells included in the RAN based notification area, and wherein the each of the plurality of areas includes one or more cells;
receiving (S530), from the specific cell, system information including a cell ID of the specific cell and an ID of an area including the specific cell;
determining (S540) the specific cell does not belong to the RAN based notification area, based on that the cell ID and the ID of the area are not included in the configuration including the plurality of cell IDs and the plurality of IDs for each of the plurality of areas;
initiating (S550) a RAN based notification area update procedure; and
informing the network of getting out of the RAN based notification area, wherein the UE is in an RRC_INACTIVE state.

2. The method of claim 1, wherein the system information is received from the specific cell when the UE performs cell reselection (S520) on the specific cell.

3. The method of claim 1, wherein the system information is received from the specific cell before the UE performs cell reselection on the specific cell.

4. The method of claim 1, wherein the specific cell is any one of a serving cell, a neighboring cell, or a target cell.

5. The method of claim 1, wherein the each of the plurality of areas and the area including the specific cell are a core network, CN, based notification area.

6. A user equipment, UE, (810) for determining whether a specific cell belongs to a radio access network, RAN, based notification area in a wireless communication system, the UE (810) comprising:
a memory (812); a transceiver (813); and a processor (811) connecting the memory (812) and the transceiver (813), wherein the processor (811) is configured to:
control the transceiver (813) to receive, from a network, a configuration for a RAN based notification area, wherein the configuration includes a plurality of identifiers, IDs, for each of a plurality of areas included in the RAN based notification area and a plurality of cell IDs for each of a plurality of cells included in the RAN based notification area, and wherein the each of the plurality of areas includes one or more cells;
control the transceiver (813) to receive, from the specific cell, system information including a cell ID of the specific cell and an ID of an area including the specific cell;
determine the specific cell does not belong to the RAN based notification area, based on that the cell ID and the ID of the area are not included in the configuration including the plurality of cell IDs and the plurality of IDs for each of the plurality of areas;
initiate a RAN based notification area update procedure; and
control the transceiver (813) to inform the network of the getting out of the RAN based notification area,
wherein the UE (810) is in an RRC_INACTIVE state.

## Patentansprüche

1. Ein Verfahren zum Bestimmen, durch ein Benutzergerät, UE, ob eine spezifische Zelle zu einem auf einem Funkzugangsnetz, RAN, -basierten Benachrichtigungsbereich in einem drahtlosen Kommunikationssystem gehört, wobei das Verfahren umfasst:
Empfangen (S510) einer Konfiguration für einen RAN-basierten Benachrichtigungsbereich von einem Netzwerk, wobei die Konfiguration eine Vielzahl von Identifikatoren, IDs, für jeden einer Vielzahl von Bereichen, die in dem RAN-basierten Benachrichtigungsbereich enthalten sind, und eine Vielzahl von Zellen-IDs für jede einer Vielzahl von Zellen, die in dem RAN-basierten Benachrichtigungsbereich enthalten sind, enthält, und wobei jeder der Vielzahl von Bereichen eine oder mehrere Zellen enthält;
Empfangen (S530), von der spezifischen Zelle, von Systeminformationen einschließlich einer Zellen-ID der spezifischen Zelle und einer ID eines Bereichs, der die spezifische Zelle enthält;
Bestimmen (S540), dass die spezifische Zelle nicht zu dem RAN-basierten Benachrichtigungsbereich gehört, basierend darauf, dass die Zellen-ID und die ID des Bereichs nicht in der Konfiguration enthalten sind, die die Vielzahl von Zellen-IDs und die Vielzahl von IDs für jeden der Vielzahl von Bereichen enthält;
Initiieren (S550) eines RAN-basierten Benachrichtigungsbereich-Aktualisierungsverfahrens; und
Informieren des Netzwerks über das Verlassen des RAN-basierten Benachrichtigungsbereichs,
wobei sich das UE in einem RRC_INACTIVE-Zustand befindet.

2. Verfahren nach Anspruch 1, wobei die Systeminformationen von der spezifischen Zelle empfangen werden, wenn das UE eine Zellenneuwahl (S520) in der spezifischen Zelle durchführt.

3. Verfahren nach Anspruch 1, wobei die Systeminformationen von der spezifischen Zelle empfangen werden, bevor das UE eine Zellenneuwahl auf der spezifischen Zelle durchführt.

4. Verfahren nach Anspruch 1, wobei die spezifische Zelle eine bedienende Zelle, eine benachbarte Zelle oder eine Zielzelle ist.

5. Verfahren nach Anspruch 1, wobei jeder der Vielzahl von Bereichen und der Bereich, der die spezifische Zelle enthält, ein Kernnetz, CN, -basierter Benachrichtigungsbereich ist.

6. Ein Benutzergerät, UE, (810) zum Bestimmen, ob eine bestimmte Zelle zu einem auf einem Funkzugangsnetz, RAN, -basierten Benachrichtigungsbereich in einem drahtlosen Kommunikationssystem gehört, wobei das UE (810) umfasst:
einen Speicher (812); einen Transceiver (813); und einen Prozessor (811), der den Speicher (812) und den Transceiver (813) verbindet, wobei der Prozessor (811) konfiguriert ist, um:
den Transceiver (813) zu steuern, von einem Netzwerk eine Konfiguration für einen RAN-basierten Benachrichtigungsbereich zu empfangen, wobei die Konfiguration eine Vielzahl von Identifikatoren, IDs, für jeden einer Vielzahl von Bereichen, die in dem RAN-basierten Benachrichtigungsbereich enthalten sind, und eine Vielzahl von Zellen-IDs für jede einer Vielzahl von Zellen, die in dem RAN-basierten Benachrichtigungsbereich enthalten sind, enthält, und wobei jeder der Vielzahl von Bereichen eine oder mehrere Zellen enthält;
den Transceiver (813) zu steuern, von der spezifischen Zelle Systeminformationen einschließlich einer Zellen-ID der spezifischen Zelle und einer ID eines Bereichs, der die spezifische Zelle enthält, zu empfangen;
zu bestimmen, dass die spezifische Zelle nicht zu dem RAN-basierten Benachrichtigungsbereich gehört, basierend darauf, dass die Zellen-ID und die ID des Bereichs nicht in der Konfiguration enthalten sind, die die Vielzahl von Zellen-IDs und die Vielzahl von IDs für jeden der Vielzahl von Bereichen enthält;
ein RAN-basiertes Benachrichtigungsbereich-Aktualisierungsverfahren einzuleiten; und
den Transceiver (813) zu steuern, das Netzwerk über das Verlassen des RAN-basierten Benachrichtigungsbereichs zu informieren,
wobei sich das UE (810) in einem RRC_INACTIVE-Zustand befindet.

## Revendications

1. Procédé de détermination, par un équipement utilisateur, UE, si une cellule spécifique appartient à une zone de notification basée sur un réseau d'accès radio, RAN, dans un système de communication sans fil, le procédé consistant à :
recevoir (S510), en provenance d'un réseau, une configuration pour une zone de notification basée sur RAN, la configuration comprenant une pluralité d'identifiants, ID, pour chaque zone de la pluralité de zones comprises dans la zone de notification basée sur RAN et une pluralité d'ID de cellules pour chaque cellule de la pluralité de cellules comprises dans la zone de notification basée sur RAN, et ladite zone de la pluralité de zones comprenant une ou plusieurs cellules ;
recevoir (S530), en provenance de la cellule spécifique, des informations système comprenant un ID de la cellule spécifique et un ID d'une zone comprenant la cellule spécifique ;
déterminer (S540) que la cellule spécifique n'appartient pas à la zone de notification basée sur RAN, en fonction du fait que l'ID de cellule et l'ID de la zone ne sont pas compris dans la configuration comprenant la pluralité d'ID de cellule et la pluralité d'ID pour chaque zone de la pluralité de zones ;
initier (S550) une procédure de mise à jour de zone de notification basée sur RAN ; et
informer le réseau de la sortie de la zone de notification basée sur RAN, l'UE étant dans un état RRC_INACTIVE.

2. Procédé selon la revendication 1, les informations système étant reçues en provenance de la cellule spécifique lorsque l'UE effectue une nouvelle sélection de cellule (S520) sur la cellule spécifique.

3. Procédé selon la revendication 1, les informations système étant reçues en provenance d'une cellule spécifique avant que l'UE effectue la nouvelle sélection de cellule sur la cellule spécifique.

4. Procédé selon la revendication 1, la cellule spécifique étant une cellule de desserte ou une cellule voisine ou une cellule cible.

5. Procédé selon la revendication 1, chaque zone de la pluralité de zones et la zone comprenant la cellule spécifique étant une zone de notification basé sur réseau central, CN.

6. Équipement utilisateur, UE, (810) pour déterminer si une cellule spécifique appartient à une zone de notification basée sur un réseau d'accès radio, RAN, dans un système de communication sans fil, l'UE (810) comprenant :
une mémoire (812) ; un émetteur-récepteur (813) ; et un processeur (811) connectant la mémoire (812) et l'émetteur-récepteur (813), le processeur (811) étant configuré pour :
amener l'émetteur-récepteur (813) à recevoir, en provenance du réseau, une configuration pour une zone de notification basée sur RAN, la configuration comprenant une pluralité d'identifiants, ID, pour chaque zone de la pluralité de zones comprises dans la zone de notification basée sur RAN et une pluralité d'ID de cellules pour chaque cellule de la pluralité de cellules comprises dans la zone de notification basée sur RAN, et ladite zone de la pluralité de zones comprenant une ou plusieurs cellules ;
amener l'émetteur-récepteur (813) à recevoir, en provenance de la cellule spécifique, des informations système comprenant un ID de la cellule spécifique et un ID d'une zone comprenant la cellule spécifique ;
déterminer que la cellule spécifique n'appartient pas à la zone de notification basée sur RAN, en fonction du fait que l'ID de cellule et l'ID de la zone ne sont pas compris dans la configuration comprenant la pluralité d'ID de cellule et la pluralité d'ID pour chaque zone de la pluralité de zones ;
initier une procédure de mise à jour de zone de notification basée sur RAN ; et
amener l'émetteur-récepteur (813) à informer le réseau de la sortie de la zone de notification basée sur RAN, l'UE (810) étant dans un état RRC_INACTIVE.
